# EUROPÄISCHE PATENTSCHRIFT

(11) **EP 1 624 776 B1**
(45) Veröffentlichungstag und Bekanntmachung des Hinweises auf die Patenterteilung: **21.02.2007**
(21) Anmeldenummer: 04739200.6
(22) Anmeldetag: 13.05.2004
(51) Int. Cl.: A47C 7/46, B60N 2/66

(54) **LORDOSENSTÜTZKORB**
LUMBAR SUPPORT BASKET
PANIER D'APPUI LORDOSIQUE

(30) Priorität: 16.05.2003 DE 10322189
(43) Veröffentlichungstag der Anmeldung: 15.02.2006
(73) Patentinhaber: Schukra Gerätebau AG, 2560 Berndorf (AT)
(72) Erfinder: STÖSSEL, Veit, 90409 Nürnberg (DE); CALINESCU, Eugen, 90449 Nürnberg (DE)
(74) Vertreter: Banzer, Hans-Jörg
(86) Internationale Anmeldenummer: PCT/EP2004/005159
(87) Internationale Veröffentlichungsnummer: WO 2004/100721

(56) Entgegenhaltungen:
- EP-A- 0 485 483
- WO-A-02/071900
- CA-A- 2 261 876
- US-A1- 2002 195 853
- US-B1- 6 254 186
- US-B1- 6 296 308

## Beschreibung

Die vorliegende Erfindung betrifft einen Lordosenstützkorb, beispielsweise zum Einbau in Rückenlehnen von Fahrzeugsitzen. Insbesondere betrifft sie einen Lordosenstützkorb, welcher auch außerordentliche Belastungen ohne Beschädigung überstehen kann.

In Lehnen von Sitzen, insbesondere Fahrzeugsitzen, sind häufig Lordosenstützkörbe eingebaut. Mit diesen lässt sich die Wölbung einer Lehne des Sitzes einstellen, um das Profil der Lehne so dem Rücken eines Benutzers anzupassen und ein angenehmeres Sitzgefühl hervorzurufen.

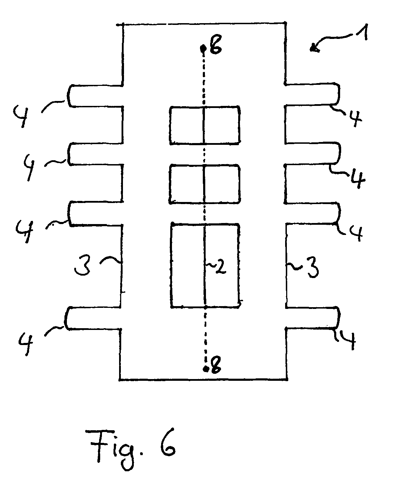

Ein derartiger Lordosenstützkorb ist in Figur 6 beispielhaft dargestellt. Der Lordosenstützkorb 1 besteht dabei im Wesentlichen aus Streben in longitudinaler Richtung 3 und Querstreben 4. Weiterhin ist in Figur 6 ein Seil oder ein Draht eines Bowdenzugs 2 angedeutet, dessen Länge zwischen zwei Punkten 8 verkürzt werden kann, um so eine Einstellkraft auf den Lordosenstützkorb 1 zu übertragen und diesen zu wölben. Somit kann eine gewünschte Wölbung des Lordosenstützkorbes 1 und damit eine Wölbung einer Fahrzeugsitzlehne, in die ein derartiger Lordosenstützkorb eingebaut ist, eingestellt werden. Ein derartiger Lordosenstützkorb ist beispielsweise aus der EP 0 485 483 B1 bekannt.

Figur 5A zeigt eine schematische Querschnittsansicht eines gewölbten Lordosenstützkorbs 1, der mittels des Bowdenzugs 2 gespannt ist. Wirkt nun, wie in Figur 5B gezeigt, eine Kraft 6 auf den gespannten Lordosenstützkorb, wird diese, wie durch Pfeile 7 angedeutet, auf die Angriffspunkte des Bowdenzugs 2 übertragen und erzeugt eine Spannung bzw. Kraftwirkung entgegen der durch den Bowdenzug 2 ausgeübten Spannung bzw. Einstellkraft. Ist diese einwirkende Kraft sehr groß, wie es bei einer missbräuchlichen Belastung des Lordosenstützkorbes (im Gegensatz zu normaler Belastung beispielsweise durch eine sitzende Person) der Fall sein kann, wirkt auf den Lordosenstützkorb, insbesondere auch auf die Angriffspunkte des Bowdenzugs 2, eine sehr große Kraft. Dies kann zu einem Bruch des Korbes, zu einem Ausreißen des Bowdenzugs 2 oder zu ähnlichen Zerstörungen führen.

Um dies zu vermeiden, kann der Lordosenstützkorb beispielsweise aus einem relativ dicken und damit stabilen Material gefertigt sein. Dies hat jedoch den Nachteil, dass auch entsprechend große Kräfte zur Wölbung des Korbes erforderlich sind. Eine andere Möglichkeit besteht darin, Federn in die Spannvorrichtung, welche den Bowdenzug 2 umfasst, einzubauen, welche einen Teil der durch eine übermäßige Kraft hervorgerufene Spannung aufnehmen. Dies bedeutet jedoch einen zusätzlichen Konstruktionsaufwand mit zusätzlichen Bauteilen.

Es ist daher eine Aufgabe der vorliegenden Erfindung, einen Lordosenstützkorb bereitzustellen, welcher einfach herzustellen ist und auch großen missbräuchlichen Belastungen Stand hält.

Erfindungsgemäß wird diese Aufgabe durch einen Lordosenstützkorb gemäß Anspruch 1 gelöst. Die Unteransprüche definieren bevorzugte oder vorteilhafte Ausführungsbeispiele des Lordosenstützkorbes.

Erfindungsgemäß wird dabei vorgeschlagen, dass ein Lordosenstützkorb, welcher derart ausgelegt ist, dass eine (longitudinale) Wölbung des Lordosenstützkorbes durch Beaufschlagen des Lordosenstützkorbes mit einer Einstellkraft einstellbar ist, mindestens einen flexiblen oder elastischen Abschnitt mit einer longitudinalen Flexibilität aufweist, welche größer als eine longitudinale Flexibilität eines anderen Abschnitts des Lordosenstützkorbes ist. Dieser andere Abschnitt kann insbesondere den übrigen Lordosenstützkorb umfassen.

Bevorzugt ist dabei die longitudinale Flexibilität des flexiblen Abschnitts derart dimensioniert, dass sich der flexible Abschnitt bei Anwendung einer Einstellkraft, für die der Lordosenstützkorb ausgelegt ist, im Wesentlichen wie der übrige Lordosenstützkorb verhält. Damit ist im normalen Betrieb, d. h. ohne Einwirkung einer außerordentlich großen Kraft, der Lordosenstützkorb wie ein Lordosenstützkorb ohne einen derartigen flexiblen Abschnitt zu benutzen.

Der flexible Abschnitt kann vorteilhaft derart ausgelegt sein, dass er sich bei Anwendung einer Zusatzkraft auf den Lordosenstützkorb, welche eine vorgegebene Normkraft übersteigt, derart reversibel verformt, dass er einen wesentlichen Teil der Zusatzkraft aufnimmt. Damit kann eine Zerstörung des Lordosenstützkorbes bei Anwendung einer derartigen Zusatzkraft verhindert werden. Die reversible Verformung kann beispielsweise durch eine reversible Längenverkürzung, eine Änderung der Krümmung des flexiblen Abschnitts oder eine Kombination dieser Elemente erfolgen.

Ein derartiger Lordosenstützkorb kann einteilig gefertigt werden, was die Herstellung vereinfacht.

Der flexible Abschnitt kann insbesondere eine geringere Dicke aufweisen als der übrige Lordosenstützkorb. Zusätzlich oder alternativ kann der flexible Abschnitt einen vorzugsweise periodisch geformten Querschnitt mit abwechselnd angeordneten Erhöhungen und Vertiefungen aufweisen, beispielsweise eine Sinuswellenform, eine Zickzackform, eine Rechteckwellenform, eine Dreieckswellenform oder dergleichen.

Die Erfindung wird im Folgenden unter Bezugnahme auf die beigefügte Zeichnung anhand bevorzugter Ausführungsbeispiele näher beschrieben. Es zeigen:
Figur 1 eine Draufsicht auf ein erfindungsgemäßes Ausführungsbeispiel eines Lordosenstützkorbes,
Figur 2 eine Querschnittsansicht entlang einer Linie A-A aus Figur 1,
Figuren 3A bis 3B ein Beispiel für das Verhalten des Lordosenstützkorbes aus Figur 1 unter missbräuchlicher Belastung,
Figuren 4A bis 4C ein weiteres Beispiel für das Verhalten des erfindungsgemäßen Lordosenstützkorbes aus Figur 1 unter missbräuchlicher Belastung,
Figuren 5A und 5B ein Beispiel für das Verhalten eines herkömmlichen Lordosenstützkorbes unter missbräuchlicher Belastung, und
Figur 6 eine Draufsicht auf ein Beispiel für einen herkömmlichen Lordosenstützkorb.

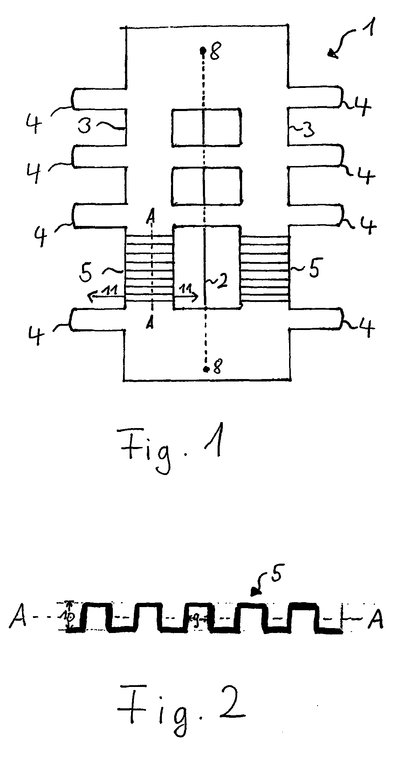

In Figur 1 ist ein erfindungsgemäßes Ausführungsbeispiel eines Lordosenstützkorbes dargestellt. Der grundsätzliche Aufbau dieses Lordosenstützkorbes entspricht dem in der Beschreibungseinleitung unter Bezugnahme auf Figur 6 dargestellten Aufbau, und gleiche Elemente sind mit den gleichen Bezugszeichen gekennzeichnet.

Dieser Lordosenstützkorb 1 ist im Wesentlichen aus zwei Längsstreben 3 und mehreren Querstreben 4 aufgebaut, welche im vorliegenden Ausführungsbeispiel einteilig beispielsweise aus einem geeigneten Kunststoff gefertigt sind. An den Querstreben 4 können Elemente vorgesehen sein, welche eine Befestigung des Lordosenstützkorbes 1 in Form einer Lordosenstütze in einer Rückenlehne beispielsweise eines Fahrzeugsitzes ermöglichen.

Zudem ist ein Draht oder Seil eines Bowdenzugs 2 dargestellt, dessen Länge zwischen zwei Angriffspunkten 8 verändert werden kann. Er dient dazu, den Lordosenstützkorb 1 mit einer Einstellkraft zu beaufschlagen, um ihn in longitudinaler Richtung, d. h. in Richtung des Bowdenzugs, zu wölben.

In den Längsstreben 3 sind flexible Abschnitte 5 vorgesehen, welche eine höhere longitudinale Flexibilität als andere Abschnitte des Lordosenstützkorbs 1, beispielsweise als der Rest des Lordosenstützkorbes 1, aufweisen. Der Lordosenstützkorb 1 kann dabei einteilig beispielsweise aus einem Kunststoffmaterial gefertigt sein. Ebenso ist denkbar, dass die flexiblen Abschnitte 5 als separate Bauteile in die Längsstreben 3 eingesetzt oder damit verbunden sind. Die flexiblen Abschnitte 5 sind auch nicht auf die Längsstreben begrenzt, sondern können beispielsweise auch Teile der Querstreben 4 umfassen.

In Figur 2 ist eine Querschnittsansicht eines der flexiblen Abschnitte 5 entlang einer Linie A-A von Figur 1 gezeigt. In dem dargestellten Ausführungsbeispiel weisen die flexiblen Abschnitte 5 einen Querschnitt in Form einer periodischen Rechteckwelle auf. Zudem kann dieser Abschnitt mit einer geringeren Dicke ausgeführt sein als der Rest des Lordosenstützkorbes 1. Insbesondere beträgt die Dicke des Materials in dem flexiblen Abschnitt zwischen 0,5 mm und 3 mm. Der Abstand 9 zwischen zwei in Figur 2 senkrechten Teilen des flexiblen Abschnitts kann dabei auch kleiner sein als in Figur 2 dargestellt und insbesondere in etwa der Dicke des Materials entsprechen. Die Höhe 10 kann dabei in etwa der halben Periodenlänge der dargestellten Rechteckwelle entsprechen.

Die dargestellten flexiblen Abschnitte 5 weisen dabei insbesondere keine wesentliche Flexibilität in die durch in Figur 1 durch Pfeile 11 angedeutete transversale Richtung (Querrichtung) in der Ebene des entspannten Lordosenstützkorbes 1 auf.

Das Verhalten des in Figur 1 und Figur 2 dargestellten erfindungsgemäßen Lordosenstützkorbes 1 unter einer Belastung ist in den Figuren 3A bis 3D, die schematische Querschnittsansichten des Lordosenstützkorbes aus Figur 1 zeigen, dargestellt.

Figur 3A zeigt dabei den Lordosenstützkorb 1 mit den flexiblen Abschnitten 5 in einem gewölbten Zustand, welcher durch Spannen des Bowdenzugs 2 hervorgerufen wird. In diesem Normalbetrieb des Lordosenstützkorbes 1 verhalten sich die flexiblen Abschnitte 5 im Wesentlichen wie der Rest des Lordosenstützkorbes 1, d. h. ihre Krümmung unterscheidet sich nicht wesentlich von der Krümmung des übrigen Lordosenstützkorbes 1.

In Figur 3B wirkt nun eine große Kraft 6, welche insbesondere eine vorgegebene Normalkraft übersteigt, für welche der Lordosenkorb 1 ausgelegt ist, auf den Lordosenstützkorb 1. Eine derartige Kraft kann insbesondere durch missbräuchliche Belastung hervorgerufen werden, z. B. wenn der Lordosenstützkorb 1 im nicht eingebauten Zustand mit einer großen Gewichtskraft beaufschlagt wird, im Gegensatz zu einer normalen Belastung, wie sie sich beispielsweise durch Anlehnen einer sitzenden Person ergeben würde. Durch diese Kraft 6 werden die flexiblen Abschnitte 5 zunächst zusammengedrückt, d. h. sie erfahren eine reversible Längenverkürzung ihrer effektiven Länge. Durch diese Längenverkürzung wird die Kraft 6 allenfalls teilweise auf die Angriffspunkte des Bowdenzugs 2 übertragen. Demnach wirkt dort keine übermäßige Kraft.

Im weiteren Verlauf dehnen sich die flexiblen Abschnitte 5 wie in Figur 3C gezeigt wieder aus und krümmen sich dabei beispielsweise nach innen, d. h. sie weisen also im Vergleich zum Rest des Lordosenstützkorbes 1 eine negative Krümmung auf. Dadurch wird durch die Verformung der flexiblen Abschnitte 5 weiterhin zumindest ein großer Teil der Kraft 6 aufgenommen.

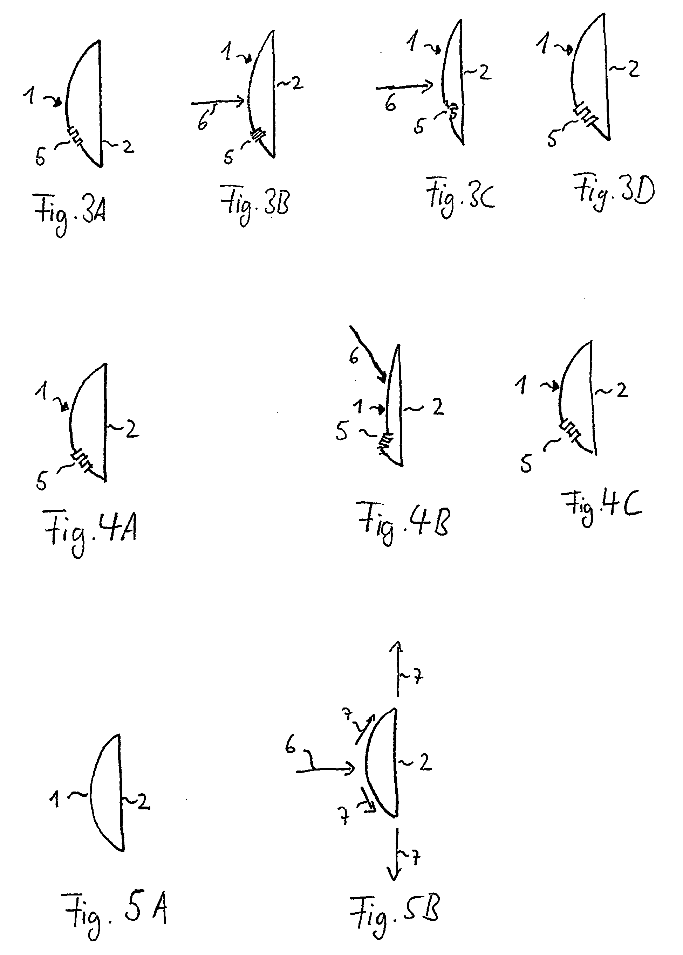

Diese Verformung ist reversibel. Wie in Figur 3D dargestellt, kehrt der Lordosenstützkorb 1 nach Beendigung der Einwirkung der Kraft 6 wieder in den Ausgangszustand zurück.

Ein weiteres Beispiel für eine missbräuchliche Krafteinwirkung ist in den Figuren 4A bis 4C gezeigt. Figur 4A entspricht dabei der oben beschriebenen Figur 3A.

In Figur 4B wirkt nun wiederum eine große Kraft 6 auf den Lordosenstützkorb 1. Im Unterschied zu der oben beschriebenen Figur 3B wirkt die Kraft schräg auf den Lordosenstützkorb 1. Dies führt, wie in Figur 4B gezeigt, sowohl zu einer Komprimierung, also einer reversiblen Längenverkürzung, als auch zu einer Änderung der Krümmung der flexiblen Abschnitte 5. Wiederum wird durch diese Verformung die Kraft 6 zu einem gewissen Teil aufgenommen, und es wirkt keine übermäßige Kraft auf den übrigen Lordosenstützkorb 1 und insbesondere auch nicht auf die Angriffspunkte des Bowdenzugs 2.

Auch in diesem Fall ist die Verformung reversibel. Wie in Figur 4C angedeutet, kehrt der Lordosenstützkorb 1 nach Beendigung der Krafteinwirkung wieder in seinen ursprünglichen Zustand zurück.

Je nach Krafteinwirkung und Ausführung der flexiblen Abschnitte 5 kann die eine einwirkende Kraft also durch eine reversible Verformung der flexiblen Abschnitte 5, insbesondere durch eine reversible Längenverkürzung, und/oder durch eine Änderung der Krümmung aufgenommen werden. Dadurch kann eine übermäßige Belastung des Lordosenstützkorbes vermieden und seine Zerstörung verhindert werden.

Selbstverständlich sind auch andere Möglichkeiten der Ausgestaltung der flexiblen Abschnitte 5 möglich. Statt einer Rechteckwelle kann beispielsweise eine Sinuswelle oder eine Dreieckwelle verwendet werden. Auch andere Ausgestaltungen, beispielsweise durch Materialien mit der benötigten Flexibilität, sind denkbar. Die Wahl der Ausgestaltung der flexiblen Abschnitte 5 wird dabei auch davon abhängen, wie der Lordosenstützkorb insgesamt gefertigt ist. Bei einer einteiligen Fertigung aus einem Kunststoffmaterial kann eine Rechteckform wie dargestellt vorteilhaft sein, bei einer Fertigung beispielsweise aus einem Draht- oder Metallgestell kann der flexible Abschnitt 5 dann beispielsweise auch durch ein Drahtmaterial mit den gewünschten Eigenschaften gebildet werden. Zudem können auch mehr als die dargestellten zwei flexiblen Abschnitte vorhanden sein, oder es kann - wie bereits angedeutet - lediglich ein flexibler Abschnitt vorgesehen sein, welcher sowohl in beiden Längsstreben als auch in der diese Längsstreben verbindenden Querstrebe ausgebildet ist.

Die flexiblen Abschnitte befinden sich vorzugsweise - wie bei dem dargestellten Ausführungsbeispiel - im Bereich des oberen oder unteren Endabschnitts des Lordosenstützkorbs, wobei jedoch grundsätzlich auch eine Anordnung in einem mittleren Abschnitt des Lordosenstützkorbs möglich ist.

Schließlich sollte auch darauf hingewiesen werden, dass in Figur 3 - Figur 5 zwar Verhältnisse im gespannten Zustand des Lordosenstützkorbs 1 dargestellt sind, wobei jedoch die obigen Überlegungen ebenso auf einen nicht gespannten Zustand des Lordosenstützkorbs anwendbar sind.

## Patentansprüche

1. Lordosenstützkorb (1), welcher derart ausgelegt ist, dass eine Wölbung des Lordosenstützkorbes (1) durch Beaufschlagen des Lordosenstützkorbes (1) mit einer Einstellkraft einstellbar ist,
wobei der Lordosenstützkorb (1) mindestens einen flexiblen Abschnitt (5) mit einer longitudinalen Flexibilität aufweist, welche größer als eine longitudinale Flexibilität eines anderen Abschnitts des Lordosenstützkorbes (1) ist, und
wobei die longitudinale Flexibilität des flexiblen Abschnitts (5) derart dimensioniert ist, dass sich der flexible Abschnitt (5) bei Anwendung einer Kraft (6) auf den Lordosenstützkorb (1), welche eine vorgegebene Normkraft übersteigt, derart reversibel verformt, dass er einen wesentlichen Teil der Kraft (6) aufnimmt,
**dadurch gekennzeichnet,**
**dass** der flexible Abschnitt (5) derart ausgelegt ist, dass die reversible Verformung eine reversible Längenverkürzung der effektiven Länge des flexiblen Abschnitts (5) umfasst.

2. Lordosenstützkorb (1) nach Anspruch 1,
**dadurch gekennzeichnet,**
**dass** der andere Abschnitt des Lordosenstützkorbes (1) durch den Lordosenstützkorb (1) mit Ausnahme des mindestens einen flexiblen Abschnitts (5) gebildet ist.

3. Lordosenstützkorb (1) nach Anspruch 1 oder 2,
**dadurch gekennzeichnet,**
**dass** die longitudinale Flexibilität des flexiblen Abschnitts (5) derart dimensioniert ist, dass sich der flexible Abschnitt bei Anwendung einer Einstellkraft, für die der Lordosenstützkorb. (1) ausgelegt ist, im Wesentlichen wie der übrige Lordosenstützkorb (1) verhält.

4. Lordosenstützkorb (1) nach einem der vorhergehenden Ansprüche,
**dadurch gekennzeichnet,**
**dass** der flexible Abschnitt (5) derart ausgelegt ist, dass die reversible Verformung eine Krümmung des flexiblen Abschnitts (5) umfasst; welche sich von der Krümmung des übrigen Lordosenstützkörbes (1) unterscheidet.

5. Lordosenstützkorb (1) nach Anspruch 4,
**dadurch gekennzeichnet,**
**dass** der flexible Abschnitt (5) derart ausgelegt ist, dass die reversible Verformung eine Krümmung mindestens eines Teils des flexiblen Abschnitts (5) umfasst, welche ein anderes Vorzeichen als die Krümmung des übrigen Lordosenstützkorbes (1) aufweist.

6. Lordosenstützkorb (1) nach einem der vorhergehenden Ansprüche,
**dadurch gekennzeichnet,**
**dass** der flexible Abschnitt (5) in Querrichtung des Lordosenstützkorbes (1) keine wesentliche Flexibilität aufweist.

7. Lordosenstützkorb (1) nach einem der vorhergehenden Ansprüche,
**dadurch gekennzeichnet,**
**dass** der Lordosenstützkorb (1) einteilig gefertigt ist.

8. Lordosenstützkorb (1) nach einem der vorhergehenden Ansprüche,
**dadurch gekennzeichnet,**
**dass** der flexible Abschnitt (5) eine geringere Dicke aufweist als der übrige Lordosenstützkorb (1).

9. Lordosenstützkorb (1) nach einem der vorhergehenden Ansprüche,
**dadurch gekennzeichnet,**
**dass** der flexible Abschnitt (5) einen Querschnitt mit abwechselnd angeordneten Erhöhungen und Vertiefungen aufweist.

10. Lordosenstützkorb (1) nach einem der vorhergehenden Ansprüche,
**dadurch gekennzeichnet,**
**dass** der flexible Abschnitt (5) einen periodisch geformten Querschnitt aufweist.

11. Lordosenstützkorb (1) nach Anspruch 9 oder 10,
**dadurch gekennzeichnet,**
**dass** der Querschnitt des flexiblen Abschnitts (5) die Form einer Sinuswelle, einer Rechteckwelle oder einer Dreieckwelle ausweist.

12. Lordosenstützkorb (1) nach einem der vorhergehenden Ansprüche,
**dadurch gekennzeichnet,**
**dass** an dem Lordosenstützkorb (1) ein Bowdenzug (2) derart angreift, dass die Einstellkraft über den Bowdenzug (2) einstellbar ist.

13. Fahrzeugsitz,
**dadurch gekennzeichnet,**
**dass** in eine Rückenlehne des Fahrzeugsitzes ein Lordosenstützkorb nach einem der Ansprüche 1-12 eingebaut ist.

## Claims

1. Lumbar support basket (1), which is arranged in such a way that an arching of the lumbar support basket (1) is adjustable by subjecting the lumbar support basket (1) to an adjusting force,
wherein the lumbar support basket (1) has at least one flexible section (5) with a longitudinal flexibility, which is greater than a longitudinal flexibility of another section of the lumbar support basket (1), and
wherein the longitudinal flexibility of the flexible section (5) is dimensioned in such a way that the flexible section (5) when a force (6), which exceeds a predetermined standard force, is applied to the lumbar support basket (1) reversibly deforms in such a way that it absorbs a substantial part of the force (6),
**characterized in that** the flexible section (5) is designed in such a way that the reversible deformation comprises a reversible curtailment of the effective length of the flexible section (5).

2. Lumbar support basket (1) according to claim 1, **characterized in that** the other section of the lumbar support basket (1) is formed by the lumbar support basket (1) with the exception of at least the one flexible section (5).

3. Lumbar support basket (1) according to claim 1 or 2, **characterized in that** the longitudinal flexibility of the flexible section (5) is dimensioned in such a way that when an adjusting force, for which the lumbar support basket (1) is designed, is applied, the flexible section behaves essentially like the remaining lumbar support basket (1).

4. Lumbar support basket (1) according to any one of the preceding claims, **characterized in that** the flexible section (5) is designed in such a way that the reversible deformation comprises an arching of the flexible section (5), which differs from the arching of the remaining lumbar support basket (1).

5. Lumbar support basket (1) according to claim 4, **characterized in that** the flexible section (5) is designed in such a way that the reversible deformation comprises an arching of at least one part of the flexible section (5), which has a different algebraic sign than the arching of the remaining lumbar support basket (1).

6. Lumbar support basket (1) according to any one of the preceding claims, **characterized in that** the flexible section (5) has no significant flexibility in the transverse direction of the lumbar support basket (1).

7. Lumbar support basket (1) according to any one of the preceding claims, **characterized in that** the lumbar support basket (1) is made as one-piece.

8. Lumbar support basket (1) according to any one of the preceding claims, **characterized in that** the flexible section (5) has a smaller thickness than the remaining lumbar support basket (1).

9. Lumbar support basket (1) according to any one of the preceding claims, **characterized in that** the flexible section (5) has a cross-section with alternating elevations and recesses.

10. Lumbar support basket (1) according to any one of the preceding claims, **characterized in that** the flexible section (5) has a periodically formed cross-section.

11. Lumbar support basket (1) according to claim 9 or 10, **characterized in that** the cross-section of the flexible section (5) has the form of a sine wave, a square wave or a triangular wave.

12. Lumbar support basket (1) according to any one of the preceding claims, **characterized in that** a Bowden cable (2) contacts the lumbar support basket (1) in such a way that the adjusting force is adjustable via the Bowden cable (2).

13. Vehicle seat, **characterized in that** a lumbar support basket is incorporated in a backrest of the vehicle seat according to any one of claims 1-12.

## Revendications

1. Panier d'appui lordosique (1) qui est conçu de façon à permettre de régler une cambrure du panier d'appui lordosique (1) en soumettant le panier d'appui lordosique (1) à une force de réglage,
le panier d'appui lordosique (1) comportant au moins une partie flexible (5) avec une flexibilité longitudinale, qui est plus importante qu'une flexibilité longitudinale d'une autre partie du panier d'appui lordosique (1), et
la flexibilité longitudinale de la partie flexible (5) étant dimensionnée de façon telle, qu'en cas d'application sur le panier d'appui lordosique (1) d'une force (6) qui est supérieure à une force normalisée prédéfinie, la partie flexible (5) se déforme de manière réversible, de façon à absorber une part essentielle de la force (6);
**caractérisé en ce que** la partie flexible (5) est conçue de façon à ce que la déformation réversible comprenne un raccourcissement réversible de la longueur effective de la partie flexible (5).

2. Panier d'appui lordosique (1) selon la revendication 1,
**caractérisé en ce que** l'autre partie du panier d'appui lordosique (1) est formée par le panier d'appui lordosique (1), à l'exception de la au moins une partie flexible (5).

3. Panier d'appui lordosique (1) selon la revendication 1 ou 2,
**caractérisé en ce que** la flexibilité longitudinale de la partie flexible (5) est dimensionnée de façon à ce que lors de l'application d'une force de réglage, pour laquelle le panier d'appui lordosique (1) est conçu, la partie flexible se comporte sensiblement comme le reste du panier d'appui lordosique (1).

4. Panier d'appui lordosique (1) selon l'une quelconque des revendications précédentes, **caractérisé en ce que** la partie flexible (5) est conçue de façon telle, que la déformation réversible comprenne une cambrure de la partie flexible (5), qui se distingue de la cambrure du reste du panier d'appui lordosique (1).

5. Panier d'appui lordosique (1) selon la revendication 4, **caractérisé en ce que** la partie flexible (5) est conçue de façon telle, que la déformation réversible comprenne une cambrure d'au moins une partie de la partie flexible (5) qui présente un autre signe que la cambrure du reste du panier d'appui lordosique (1).

6. Panier d'appui lordosique (1) selon l'une quelconque des revendications précédentes, **caractérisé en ce que** la partie flexible (5) ne fait preuve d'aucune flexibilité essentielle dans le sens transversal du panier d'appui lordosique (1).

7. Panier d'appui lordosique (1) selon l'une quelconque des revendications précédentes, **caractérisé en ce que** le panier d'appui lordosique (1) est fabriqué en monobloc.

8. Panier d'appui lordosique (1) selon l'une quelconque des revendications précédentes, **caractérisé en ce que** la partie flexible (5) a une épaisseur moindre que le reste du panier d'appui lordosique (1).

9. Panier d'appui lordosique (1) selon l'une quelconque des revendications précédentes, **caractérisé en ce que** la partie flexible (5) présente une section transversale avec des bosses et des creux disposés en alternance.

10. Panier d'appui lordosique (1) selon l'une quelconque des revendications précédentes, **caractérisé en ce que** la partie flexible (5) présente une section transversale façonnée de façon périodique.

11. Panier d'appui lordosique (1) selon la revendication 9 ou 10, **caractérisé en ce que** la section transversale de la partie flexible (5) présente la forme d'une onde sinusoïdale, d'une onde rectangulaire ou d'une onde triangulaire.

12. Panier d'appui lordosique (1) selon l'une quelconque des revendications précédentes, **caractérisé en ce qu'**un câble sous gaine (2) saisit le panier d'appui lordosique (1) de façon à ce que la force de réglage soit réglable par l'intermédiaire du câble sous gaine (2).

13. Siège de véhicule,
**caractérisé en ce qu'**un panier d'appui lordosique selon l'une quelconque des revendications 1 à 12 est intégré dans le dossier du siège de véhicule.
